# DEMANDE DE BREVET EUROPEEN

(11) **EP 3 594 667 A1**
(43) Date de publication de la demande: **15.01.2020**
(21) Numéro de dépôt: 18290083.7
(22) Date de dépôt: 12.07.2018
(51) Int. Cl.: G01N 21/88, B21C 51/00, B21B 38/00, G01B 11/30, G01N 21/892

(54) **INSTALLATION DE DÉTECTION DE DÉFAUTS PÉRIODIQUES D'UN PRODUIT EN DÉFILEMENT**

(71) Demandeur: Primetals Technologies France SAS, 42600 Savigneux (FR)
(72) Inventeur: Dorel, Laurent, F-42600 Savigneux (FR); Mogier, Denis, 42600 Savigneux (FR)
(74) Mandataire: Metals@Linz

(57) **Abrégé**

La présente invention décrit une installation de détection comprenant au moins un rouleau (10) disposé en amont d'un système de détection de défauts (2, 3, 4) d'un produit (1) en défilement selon une direction longitudinale (X) sur le rouleau disposé selon une direction transversale (Y), les dits défauts étant générés par le rouleau et étant de type périodiques sur au moins une face du produit,
- le système de détection de défauts comprend une unité d'inspection (2, 3) étant disposée en vis-à-vis de la face du produit et comprenant au moins un capteur (2) afin de collecter des images sous forme de valeurs de mesure du produit, caractérisée par :
- un module mesureur (9) émettant au moins un signal déclencheur (8) à chaque tour du rouleau, ledit signal étant transmis à un module de recherche (4) de défauts périodiques afin de déterminer une longueur réelle parcourue d'un défaut sur la bande pour chacune des images acquises entre deux fronts successifs du signal déclencheur.

## Description

La présente invention concerne une installation de détection selon le préambule de la revendication 1.

A l'heure actuelle, il existe plusieurs installations possibles de détection comprenant au moins un rouleau disposé en amont d'un système de détection de défauts d'un produit, en particulier un produit métallique tel qu'une plaque ou une bande, en défilement sur le rouleau selon une direction longitudinale, les dits défauts étant générés par le rouleau et étant de type périodiques dans la direction de défilement sur au moins une face du produit. Le système de détection de défauts comprend une unité d'inspection étant disposée en vis-à-vis de la face du produit et comprenant au moins une caméra afin de collecter des images d'intensité lumineuse de la face du produit.

Un tel produit métallique peut être une bande, une plaque ou tout autre produit long sur lequel le rouleau générateur de défauts périodiques exerce au moins une pression par contact sous effort ou non avec ledit produit. A titre d'exemple, de tels rouleaux sont généralement des cylindres de travail de laminoir ou des rouleaux de planeuse qui exercent une pression sur un produit métallique en défilement.

Principalement, trois problématiques se posent lors de la détection de défauts périodiques. La première problématique est de maximiser la dynamique de mesure des défauts, ce qui peut être résolu en additionnant des intensités lumineuses d'images exactement séparées par un cycle de révolution du rouleau générant les défauts. La seconde problématique qui en découle est alors de déterminer la période de révolution exacte du rouleau générant les défauts ou, plus mécaniquement, de déterminer la longueur réelle parcourue du produit sur le dit rouleau pendant un tour complet de rouleau afin de définir le début et la fin des images sur chacune des périodes successives parcourues par le produit. Cet objectif est complexe, car le produit peut aussi glisser sur le rouleau ou le rouleau peut également changer de diamètre par simple usure de sa surface. Enfin, une troisième problématique est de pouvoir déterminer quel(s) rouleau(x) d'une série de rouleaux disposés sur un parcours du produit en défilement est à l'origine de la génération de défauts périodiques, sachant que ce ou ces mêmes rouleaux sont voués à des usures (changement de diamètre avec le temps) ou sur lesquels le produit peut être soumis à des effets de glissement.

JP2011-242318A présente une telle installation de détection de défauts périodiques sur une bande provenant d'une bobine. Afin de résoudre la seconde problématique précitée, la longueur de la bande étant supposée être donnée, un ou des pas de défauts détectés sont recherchés. Pour cela, un rouleau convoyeur du produit est de plus doté d'un générateur d'impulsion en synchronisation avec la caméra et afin de délivrer une position du produit en fonction du nombre de tours du rouleau convoyeur et donc afin de délivrer une position des défauts mesurés de sorte qu'il est possible de savoir si le pas des défauts est bien constant ou non, et donc de savoir si le défaut est périodique ou non. Des effets de glissement du produit sur le rouleau convoyeur semblent être ici difficilement pris en compte, ainsi que l'usure même dudit rouleau. De plus, rien n'indique quel rouleau en amont du système d'inspection génère un défaut périodique.

Selon le même schéma, JP2011-145103A présente une installation de détection de défauts périodiques sur une bande qui prévoit deux rouleaux convoyeurs disposés successivement en amont et au face du dispositif d'inspection (caméra et unité d'illumination), chacun des dits rouleaux étant doté d'un générateur d'impulsion comme précédemment. Cela laisse penser qu'un effet de glissement de produit sur un des rouleaux convoyeurs peut peut-être être mieux détecté par une divergence temporelle des intervalles entre les deux impulsions (intervalle théoriquement constant). Ici aussi, rien n'indique quel rouleau en amont du système d'inspection génère un défaut périodique.

Toujours dans la même lignée, FR2195347A5 présente une installation de détection de défauts périodiques sur une bande qui prévoit deux rouleaux convoyeurs disposés toutefois de part et d'autre d'une bande et en amont du dispositif d'inspection, un des dits rouleaux étant doté d'un générateur d'impulsion comme précédemment. L'effet de pincement de bande entre les deux rouleaux laisse penser qu'un effet de glissement de produit sur un des rouleaux convoyeurs peut être atténué. Ici aussi, rien n'indique quel rouleau en amont du système d'inspection génère un défaut périodique.

Enfin, EP316961B1 présente une installation de détection de défauts périodiques sur une bande qui prévoit un rouleau convoyeur de bande disposé entre deux paires de rouleaux réducteurs de bande, dont au moins une paire est potentiellement génératrices de défauts périodiques. Le rouleau convoyeur est doté d'un générateur d'impulsion comme précédemment sous forme d'un signal d'horloge. Des moyens fournissent un signal dit de verrouillage chaque fois qu'un nombre prédéterminé de signaux d'horloge sont engendrés par le générateur d'impulsion du rouleau convoyeur. Un intervalle de temps entre deux signaux continus de verrouillage est délivré par les dits moyens représentant la longueur circonférentielle des rouleaux de la paire potentiellement génératrices de défauts périodiques. Il s'agit toutefois ici d'une estimation de la longueur circonférentielle des rouleaux de la paire potentiellement génératrice de défauts périodiques, car celle-ci a été prédéterminée par un certain nombre de cycles de révolution du rouleau convoyeur (à faible diamètre comparativement aux forts diamètres de la paire de rouleaux génératrice de défauts périodiques). Une mesure précise de la longueur circonférentielle des rouleaux de la paire potentiellement génératrice de défauts périodiques n'est donc pas possible. De ce fait, si de faibles écarts de diamètres existent entre des rouleaux de paires potentiellement génératrices de défauts périodiques et disposées successivement dans la direction de défilement du produit, l'installation de détection de défauts périodiques ne pourra pas discerner quelle paire de rouleaux génère un ou des défauts périodiques.

Des recherches récentes dans le cadre d'un projet européen (Roll mark détection on tandem mill, ISBN 978-92-79-21755-5, doi :10.2777/89370, ISSN 1831-9424, 2011) ont permis de mieux détecter de tels défauts périodiques et de potentiels rouleaux générateurs de tels défauts, à savoir en utilisant un système d'inspection muni d'une unité d'illumination à 3 éclairages et d'une caméra, tous disposés en vis-à-vis d'une face de produit métallique à inspecter. Ce système permet d'obtenir des images dans lesquelles des défauts périodiques présentent un contraste amélioré, sachant que ces défauts peuvent généralement être fort peu visibles. Pour certains défauts de type microscopique, la superposition des images (= addition des intensités lumineuses d'images exactement séparées par un cycle de révolution du rouleau générant les défauts) reste toutefois nécessaire et donc nécessite de devoir être capable de mesurer en temps réel un cycle de révolution du rouleau générant les défauts par le biais du système d'inspection, c'est-à-dire au moyen des images fournies par la caméra. Dans le cadre du projet européen, un algorithme de superposition des images a ainsi été développé, ainsi qu'un algorithme d'analyse de texture des images superposées afin de déterminer le cycle de révolution d'au moins un des rouleaux potentiellement générateur de défauts périodiques. En raison de phénomène de glissement du produit métallique sur le rouleau ou en raison d'usure du rouleau, le pas du défaut périodique marqué sur le produit et enregistré par une caméra est donc potentiellement variable entre deux passages du même défaut sous la caméra. Ce type d'algorithme reste donc très complexe et requiert de multiples modules de type DSP (Digital Signal Processors) en raison des données de texture fort volumineuses. En conséquence, ce type d'installation de détection reste aussi onéreux à mettre en place.

Un but de la présente invention est de proposer une installation simple de détection de défauts périodiques sur un produit, généralement métallique, en défilement par contact sur au moins un rouleau potentiellement générateur desdits défauts. En particulier, cette installation doit être robuste face à des phénomènes d'usure de tels rouleaux ainsi que des phénomènes de glissement du produit sur le rouleau. L'emploi de moyens softwares complexes ou d'un nombre élevé de modules de type DSP en raison de fort volumes de données d'inspection du produit devrait être limité afin de rendre l'installation proposée plus simple et moins onéreuse.

A cet effet, une installation avantageuse de détection de défauts périodiques est ainsi proposée au travers des caractéristiques de la revendication 1.

Un ensemble de sous-revendications présente également des avantages de l'invention.

Des exemples de réalisation et d'application ainsi que leurs aspects avantageux sont fournis à l'aide de figures décrites :
- Figure 1 :: premier mode de réalisation basique de l'installation selon l'invention,
- Figure 2 :: second mode de réalisation étendue de l'installation selon l'invention.

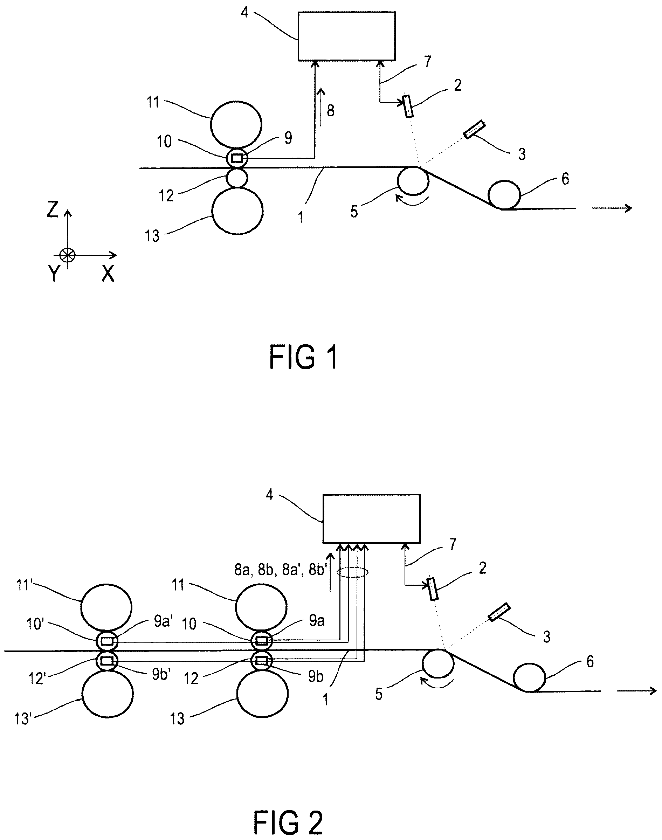

Figure 1 présente un premier mode de réalisation basique de détection de défauts périodiques de l'installation selon l'invention.

La dite installation de détection comprend au moins un rouleau (10) disposé en amont d'un système de détection de défauts (2, 3, 4) d'un produit ici métallique (1) en défilement selon une direction longitudinale (X), ici horizontale, sur le rouleau ayant un axe principal disposé selon une direction transversale (Y), les dits défauts étant générés par le rouleau et étant de type périodique sur au moins une face, en surface ou en volume du produit. Le système de détection de défauts comprend une unité d'inspection (2, 3) étant disposée en vis-à-vis de la face du produit et comprend au moins un capteur (2) afin de collecter des images sous forme de valeurs de mesure du produit, par exemple sous forme de valeurs d'intensité lumineuse (7) de la face du produit, lesdites images étant fournies à un module de recherche de défauts périodiques (4). Alternativement, il est possible que des images issues du système de détection comprennent des valeurs d'altitude (direction Z) en surface du produit, si les défauts périodiques peuvent être résolus par ce type de mesure 3D. Enfin, il est possible que des images issues du système de détection comprennent des valeurs d'altitude (direction Z) dans le volume du produit, si les défauts périodiques peuvent être résolus par ce type de mesure interne au produit.

Les valeurs de mesure peuvent ainsi être des valeurs d'intensité lumineuse en surface de produit, par exemple en niveaux de gris ou de couleurs, ou des valeurs d'altitude en surface de produit, par exemple délivrés par une unité d'inspection 3D, ou des valeurs de mesure échographiques du produit, par exemple via une unité de mesure à ultra-son ou par laser (technologie LIBS, ondes de Lamb, etc.).

L'invention prévoit de plus qu'un module mesureur (9) est disposé dans l'installation afin d'émettre au moins un signal déclencheur (8) à chaque tour du rouleau générant les défauts périodiques, ledit signal déclencheur étant transmis au module de recherche (4) de défauts périodiques afin de déterminer une longueur réelle parcourue d'un défaut sur la bande pour chacune des images acquises entre deux fronts successifs du signal déclencheur.

Etant donné que le signal déclencheur est généré par le rouleau qui génère les défauts périodiques à chaque tour de rouleau, il indique cycliquement et exactement l'intervalle de temps entre deux passages du défaut sous l'unité d'inspection. De ce fait, même si le produit vient à glisser sur le rouleau ou bien si le rouleau change de diamètre au fur et à mesure du temps (usure), le module de recherche de défaut périodique aura toujours la connaissance de la distance parcouru pour chaque défaut périodique entre deux fronts du signal déclencheur. En d'autres termes, même si le capteur enregistre des séquences d'images pour lesquelles les distances cycliques entre un même défaut (ou périodes d'apparition sous la caméra) diffèrent pour divers cycles de révolution de rouleau (en raison d'un glissement de produit sur le rouleau), des valeurs de mesure sur le produit (par exemple des valeurs d'intensité lumineuse) d'images acquises entre chacun des fronts successifs du signal déclencheur pourront être exactement additionnées afin d'améliorer le contraste de détection de défauts périodiques. A l'inverse des états de la technique présentés, le pas variable marqué sur le produit par un défaut périodique est donc très simplement obtenu entre chacun de deux fronts successifs du signal déclencheur qui reflète une mesure exacte d'un point absolu de révolution complète du rouleau marqueur. Aucun module software n'est donc requis pour calculer un quelconque pas réel (et variable) marqué sur le produit par un défaut périodique, ce qui rend l'installation selon l'invention fort simple, moins complexe et onéreuse.

Dans un but de simplicité encore, l'unité d'inspection (2, 3) peut être de type linéaire, par exemple en comprenant un capteur délivrant des données 2D et/ou 3D, afin en particulier de fournir l'image de valeurs de mesure de produit selon une ou plutôt selon chaque ligne transversale (Y) de la face du produit en défilement.

A titre d'exemple, si un défaut périodique a été marqué à deux reprises lors de deux images acquises entre trois fronts du signal déclencheur et qui exhiberaient deux pas réels différents de défauts (sur deux tours de rouleau), les deux images peuvent être déterminées en ce qu'elles comprennent un premier nombre (N1) de lignes d'intensité lumineuse et un autre second nombre (N2≠N1) de lignes d'intensité lumineuse. Le module de recherche de défauts périodiques (4) procédera alors par exemple à un recalibrage de ces deux nombres de lignes pour pouvoir les additionner unitairement et fournir une image finale des défauts périodiques ayant un fort contraste.

Le système de détection de défauts peut aussi comprendre au moins une unité d'illumination (3) disposée en vis-à-vis de la face du produit, par exemple au moyen d'une rampe transversale de diodes ou une autre forme de ligne laser. On dispose alors d'un système d'inspection par illumination disposé idéalement en vis-à-vis d'une face de produit, ledit produit pouvant être aussi disposé sur un second rouleau convoyeur et déflecteur (5) afin de transporter la bande. Les valeurs délivrées de mesure peuvent ainsi être de type 2D (intensités lumineuses). ou 3D (altitudes).

La dite unité d'illumination peut également être disposée en triangulation (3) par rapport au capteur (2). On dispose alors d'un système d'inspection par triangulation disposé idéalement en vis-à-vis d'une face de produit. Les valeurs délivrées de mesure peuvent ainsi être de type 3D (altitudes) .

Enfin, le système de détection de défauts peut aussi comprendre au moins une unité émettrice (3) et une unité réceptrice (2) de type électromagnétique disposées en vis-à-vis de la face de bande, en particulier pour obtenir des valeurs de mesure volumique (par échographie comme cité précédemment) du produit.

Comme dans l'état de la technique, il serait aussi possible de disposer un générateur d'impulsion sur le rouleau déflecteur (5) et de déterminer la longueur parcourue du produit, mais cela n'apporterait en rien une solution à la problématique de l'invention, car ce rouleau convoyeur-déflecteur ne peut apporter une mesure réelle de distance parcourue par un même défaut sur le produit ou sur le rouleau générateur de défaut. Tout au plus, le rouleau convoyeur et/ou déflecteur permettrait de déclencher une acquisition d'images synchrones au générateur d'impulsion et de mesurer des positions précises des défauts sur une bande finale, dans l'hypothèse où il n'y a pas d'allongement du produit en aval du dit rouleau (5). Cette technique est déjà industrialisée. L'invention ne traite toutefois pas cet aspect.

Alternativement, l'unité d'inspection est de type matriciel, par exemple en comprenant un capteur délivrant des données 2D et/ou 3D, afin en particulier de fournir l'image de valeurs de mesure du produit selon plusieurs lignes transversales (Y) successives de la face du produit selon la direction (X) de défilement. L'avantage de cette alternative est de pouvoir augmenter le nombre de lignes d'intensité lumineuse acquises par rapport à une capteur de type linéaire. On peut ainsi espérer obtenir plus rapidement un contraste plus élevé d'une image finale de défauts périodiques. Il est toutefois requis que le module de recherche de défauts périodiques soit plus performant ou complexe que pour une unité d'inspection de type linéaire, en raison du volume accru de données d'images bidimensionnelles à traiter.

Dans tous les cas (unité d'inspection linéaire ou matricielle), le système de détection de défauts comprend un module de traitement d'image apte à additionner au moins deux lignes de valeurs de mesure du produit (par exemple des valeurs d'intensité lumineuse) sur des profils transversaux de la face de produit successivement acquis le long de la direction (X) de défilement dudit produit, chacune des lignes étant acquise à deux points temporels séparés par un intervalle défini fort précisément entre deux fronts du signal déclencheur émis exactement par au moins un tour de rouleau.

La présente installation selon l'invention est particulièrement bien adaptée lorsque le rouleau générateur de défauts périodique exerce une pression sur la face du produit, tel qu'un rouleau de planage ou un cylindre de laminoir pour un produit long (bande, plaque, etc.). En particulier, dans le domaine de la métallurgie à haute productivité, il peut s'avérer qu'un produit soit pollué pour une quelconque raison et peut ainsi provoquer une altération sur un rouleau ou cylindre d'une machine. De tels rouleaux ou cylindres sont enfin simplement couplables au module mesureur (9) délivrant le signal déclencheur. Préférentiellement, le module mesureur effectue une mesure de type angulaire ou de type temporel ou de type compte-tour, en particulier la dite mesure étant réalisée par un couplage au rouleau ou à une allonge d'entrainement du rouleau ou étant réalisée par une détection visuelle d'une marque rotative significative de la rotation du rouleau. Diverses technologies de tels modules de mesure sont disponibles sur le marché et l'invention ne traite pas cet aspect.

Figure 2 présente un second mode de réalisation étendue de l'installation de détection de défaut périodiques selon l'invention.

Ce second mode de réalisation présente toutes les caractéristiques du premier mode de réalisation de la figure 1.

Additionnellement, l'installation comprend plusieurs rouleaux (10, 12, 10', 12') pouvant générer des défauts périodiques individuels sur le produit, chacun desdits rouleaux étant couplé à un module mesureur (9a, 9b, 9a', 9b') et émettant respectivement un signal déclencheur individuel (8a, 8b, 8a', 8b') à chaque tour du dit rouleau, les dits signaux déclencheurs individuels étant transmis au un module de recherche (4) de défauts périodiques afin de déterminer une longueur réelle parcourue d'un défaut sur la bande pour chacune des images acquises entre deux fronts successifs du signal déclencheur.
Enfin, pour chacun des signaux déclencheurs individuels des rouleaux (10, 12, 10', 12'), le module de recherche de défauts périodiques délivre une image finale (par addition de série d'images successivement additionnées en fonction de leur longueur respective réelle parcourue d'un défaut comme expliqué en figure 1) qui atteste si un ou plusieurs défauts sont générés par ce rouleau. Il est donc avantageusement possible de simplement détecter et identifier si et lequel ou lesquels des rouleaux génère(nt) un ou plusieurs défauts périodiques.

Lors d'une telle détection et identification d'un rouleau marqueur d'un défaut périodique également détecté, le module de recherche de défauts périodiques émet un signal d'identification d'un des dits rouleaux présentant du défaut périodique, de sorte qu'un opérateur de la machine, ici un laminoir à deux cages quarto comprenant des paires de cylindres d'appui (11, 13, 11', 13') et des paires de cylindres de travail (10, 12, 10', 12') puisse vérifier et si nécessaire faire nettoyer ou changer le rouleau pollué ou défectueux.

La dite installation selon figure 2 présente ainsi un double avantage : celui lié à une première détection simple de défauts périodiques générés par au moins un des rouleaux liés à une ligne de passe du produit, ainsi que celui lié à une seconde détection ou identification immédiate du dit rouleau générant le défaut périodique parmi une pluralité des rouleaux liés à une ligne de passe du produit, en amont du système d'inspection.

## Revendications

1. Installation de détection comprenant au moins un rouleau (10) disposé en amont d'un système de détection de défauts (2, 3, 4) d'un produit (1) en défilement selon une direction longitudinale (X) sur le rouleau disposé selon une direction transversale (Y), les dits défauts étant générés par le rouleau et étant de type périodiques sur au moins une face du produit,
- le système de détection de défauts comprend une unité d'inspection (2, 3) étant disposée en vis-à-vis de la face du produit et comprenant au moins un capteur (2) afin de collecter des images sous forme de valeurs de mesure du produit, **caractérisée par** :
- un module mesureur (9) émettant au moins un signal déclencheur (8) à chaque tour du rouleau, ledit signal étant transmis à un module de recherche (4) de défauts périodiques afin de déterminer une longueur réelle parcourue d'un défaut sur la bande pour chacune des images acquises entre deux fronts successifs du signal déclencheur.

2. Installation selon revendication 1, pour laquelle les valeurs de mesure sont des valeurs d'intensité lumineuse en surface de produit, par exemple en niveaux de gris ou de couleurs, ou des valeurs d'altitude en surface de produit ou des valeurs échographiques du produit.

3. Installation selon revendication 1 ou 2, pour laquelle le système de détection de défauts comprend un module de traitement d'image apte à additionner au moins deux lignes de valeurs de mesure sur des profils transversaux de la face, chaque ligne étant acquise à deux points temporels séparés par un intervalle défini entre deux fronts du signal déclencheur émis par au moins un tour de rouleau.

4. Installation selon une des revendications 1 à 3, pour laquelle le module mesureur effectue une mesure de type angulaire ou de type temporel ou de type compte-tour, en particulier la dite mesure étant réalisée par un couplage au rouleau ou à une allonge d'entrainement du rouleau ou étant réalisée par une détection visuelle d'une marque rotative significative de la rotation du rouleau.

5. Installation selon une des revendications 1 à 4, comprenant plusieurs rouleaux (10, 12, 10', 12') pouvant générer des défauts individuels sur le produit, chacun desdits rouleaux étant couplé à un module mesureur (9a, 9b, 9a', 9b') et émettant respectivement un signal déclencheur individuel (8a, 8b, 8a', 8b') à chaque tour du dit rouleau, les dits signaux déclencheurs individuels étant transmis au module de recherche de défauts périodiques afin de déterminer une longueur réelle parcourue d'un défaut sur la bande pour chacune des images acquises entre deux fronts successifs du signal déclencheur.

6. Installation selon revendication 5, pour laquelle le module de recherche de défauts périodiques émet un signal d'identification d'un des dits rouleaux présentant un défaut périodique.

7. Installation selon une des revendications 1 à 6, pour laquelle l'unité d'inspection est de type linéaire, par exemple en comprenant un capteur délivrant des données 2D et/ou 3D, afin en particulier de fournir l'image selon une ligne transversale (Y) de la face du produit.

8. Installation selon une des revendications 1 à 6, pour laquelle l'unité d'inspection est de type matriciel, par exemple en comprenant un capteur délivrant des données 2D et/ou 3D, afin en particulier de fournir l'image selon plusieurs lignes transversales (Y) de la face du produit.

9. Installation selon une des revendications 1 à 8, pour laquelle le rouleau exerce une pression sur la face du produit, telle qu'un rouleau de planage ou un cylindre de laminoir.

10. Installation selon une des revendications 1 à 9, pour laquelle le système de détection de défauts comprend au moins une unité d'illumination (3) disposée en vis-à-vis de la face de bande.

11. Installation selon une des revendications 1 à 9, pour laquelle le système de détection de défauts comprend au moins une unité émettrice (3) et une unité réceptrice de type électromagnétique disposées en vis-à-vis de la face de bande.
